# EUROPÄISCHE PATENTSCHRIFT

(11) **EP 3 964 696 B1**
(45) Veröffentlichungstag und Bekanntmachung des Hinweises auf die Patenterteilung: **31.01.2024**
(21) Anmeldenummer: 21189284.9
(22) Anmeldetag: 03.08.2021
(51) Int. Cl.: F01N 3/20

(54) **ABGASHEIZER**
EXHAUST HEATER
CHAUFFAGE DE GAZ D'ÉCHAPPEMENT

(30) Priorität: 08.09.2020 DE 102020123376
(43) Veröffentlichungstag der Anmeldung: 09.03.2022
(73) Patentinhaber: Purem GmbH, 66539 Neunkirchen (DE)
(72) Erfinder: Höckel, Sandra, Esslingen am Neckar (DE); Uysal, Fatih, Plochingen (DE)
(74) Vertreter: Ruttensperger Lachnit Trossin Gomoll

(56) Entgegenhaltungen:
- EP-A1- 0 608 783
- US-A- 4 723 973
- US-A1- 2020 109 652

## Beschreibung

Die vorliegende Erfindung betrifft einen Abgasheizer für eine Abgasanlage einer Brennkraftmaschine.

Aus der EP 2 935 996 B1 ist ein Abgasheizer bekannt, bei welchem ein mit im Wesentlichen kreisrundem Heizleiter-Querschnitt ausgebildeter Heizleiter spiralartig gewunden in einem von Abgas durchströmbaren, rohrartigen Gehäuse angeordnet ist. Durch Anlegen einer elektrischen Spannung an Anschlussenden des Heizleiters wird der Heizleiter erwärmt, so dass Wärme auf den Heizleiter umströmendes Abgas übertragen werden kann.

Aus der DE 10 2005 011 657 A1 ist ein Abgasheizer für eine Abgasanlage einer Brennkraftmaschine bekannt, bei welcher ein mit bandartigem Flachmaterial aufgebauter Heizleiter mit eine Mittenachse umgebender, spiralartiger und schraubenartig axial ausgedehnter Struktur bereitgestellt ist.

Ein Abgasheizer gemäß dem Oberbegriff des Anspruchs 1 ist aus der US 2020/0109652 A1 bekannt. Der durch Heraustrennen aus einer Platte von elektrisch leitendem Material bereitgestellte Heizleiter weist eine gitterartige Struktur von aneinander anschließenden Heizleiterabschnitten auf.

Es ist die Aufgabe der vorliegenden Erfindung, einen Abgasheizer für eine Abgasanlage einer Brennkraftmaschine vorzusehen, mit welchem bei einfach zu realisierendem Aufbau ein verbessertes Heizverhalten erreicht werden kann.

Erfindungsgemäß wird diese Aufgabe gelöst durch einen Abgasheizer für eine Abgasanlage einer Brennkraftmaschine gemäß Anspruch 1, umfassend einen Träger und wenigstens einen an dem Träger getragenen, stromdurchflossenen Heizleiter, wobei der Heizleiter durch Heraustrennen aus einem Metall-Flachmaterial bereitgestellt ist.

Der Vorgang zum Herstellen des Heizleiters für einen derartigen Abgasheizer ist einfach zu realisieren, da dieser lediglich das Bereitstellen eines Rohlings des Metall-Flachmaterials und das Heraustrennen des Heizleiters beispielsweise durch Stanzen oder Schneiden erfordert. Gleichzeitig kann bei dieser Herstellung der Heizleiter mit nahezu beliebigen Verlauf und variierendem Heizleiter-Querschnitt bereitgestellt werden. Dies ermöglicht über den Querschnitt eines derartigen Abgasheizers eine Variation der lokal bereitgestellten Wärme und somit eine Anpassung an ein möglicherweise ungleichmäßiges Anströmen des Heizleiters, was durch Wickeln eines aus beispielsweise drahtartigem oder bandartigem Langmaterial bereitgestellten Heizleiters nicht oder nur mit sehr großem Aufwand realisierbar wäre.

Durch das Bereitstellen des Heizleiters durch Heraustrennen aus einem Metall-Flachmaterial wird es in einfacher Art und Weise möglich, den Heizleiter mit eckiger, vorzugsweise rechteckiger, Leiter-Querschnittskontur auszubilden. Eine eckige Leiter-Querschnittskontur weist bei gleicher Leiter-Querschnittsfläche eine größere Oberfläche auf, als eine runde Leiter-Querschnittskontur, so dass an dem Heizleiter eine größere Oberfläche zur Übertragung von Wärme auf diesen umströmendes Abgas bereitgestellt werden kann.

Um an dem Heizleiter verschiedene Funktionsbereiche mit für die durch diese zu erfüllenden Funktionen optimierter Ausgestaltung bereitzustellen weist der Heizleiter einen an dem Träger gehaltenen Haltebereich und einen von Abgas umströmbaren Heizbereich auf.

Da im Allgemeinen der Abgasheizer in einem von Abgas durchströmbaren, beispielsweise rohrartigen Gehäuse untergebracht wird, ist es besonders vorteilhaft, wenn der Haltebereich bezogen auf eine Abgasheizer-Mittenachse radial außerhalb des Heizbereichs angeordnet ist.

Eine axial kompakte Bauweise kann dadurch erreicht werden, dass der Haltebereich und der Heizbereich im Wesentlichen in einer vorzugsweise zur Abgasheizer-Mittenachse orthogonalen Ebene angeordnet sind. Dabei ist darauf hinzuweisen, dass selbstverständlich der Abgasheizer quer zu einer derartigen fiktiven Ebene eine Ausdehnung aufweist. Eine derartige Ebene kann beispielsweise durch eine axiale Mittenebene des Heizleiters oder durch eine der beiden axialen Seiten bzw. Stirnflächen des Heizleiters definiert sein. Da der Heizleiter durch Heraustrennen aus einem im Allgemeinen eben ausgebildeten Metall-Flachmaterial erzeugt wird, kann durch nachträgliches axiales Ausdehnen des Heizleiters die zur Wärmeübertragung zur Verfügung stehende Oberfläche nicht vergrößert werden, sondern es wird lediglich der Abstand zwischen einander benachbarten Abschnitten des Heizleiters vergrößert, was wiederum zu einer Beeinträchtigung der thermischen Wechselwirkung mit den Heizleiter umströmendem Abgas führen kann. Daher ist es vorteilhaft, den beispielsweise durch Heraustrennen aus einem ebenen Metall-Flachmaterial erzeugten Heizleiter in einer derartigen ebenen Struktur zu belassen.

Für eine stabile Anbindung des Heizleiters an den Träger wird vorgeschlagen, dass der Träger einen den Heizleiter radial außen umgebenden und im Haltebereich an wenigstens einer axialen Seite radial übergreifenden Trägerkörper umfasst, oder/und dass der Träger an wenigstens einer Axialseite des Heizleiters eine den Heizleiter axiale stützende Stützanordnung umfasst.

Um den Heizleiter an den Träger anbinden zu können bzw. in den Trägerkörper integrieren zu können, kann der Trägerkörper ein erstes Trägerkörperteil mit einem den Haltebereich radial außen axial übergreifenden Axialabschnitt und einem von dem Axialabschnitt nach radial innen sich erstreckenden und den Haltebereich an einer ersten Axialseite wenigstens teilweise radial übergreifenden ersten Radialabschnitt sowie ein am ersten Trägerkörperteil festgelegtes zweites Trägerkörperteil mit einem den Haltebereich an einer zweiten Axialseite radial wenigstens teilweise übergreifenden zweiten Radialabschnitt umfassen.

Für eine über den gesamten Umfang stabile Kopplung zwischen Heizleiter und Träger wird vorgeschlagen, dass das erste Trägerkörperteil oder/und das zweite Trägerkörperteil ringartig ausgebildet ist.

Da aus Gründen der thermischen und chemischen Stabilität der Trägerkörper vorteilhafterweise mit Metallmaterial aufgebaut ist, wird zum Vermeiden eines elektrischen Kurzschlusses vorgeschlagen, dass zwischen dem Trägerkörper und dem Haltebereich elektrisch isolierendes Material angeordnet ist.

Bei einer hinsichtlich der thermischen Wechselwirkung zwischen dem Heizbereich und dem diesen umströmenden Abgas besonders vorteilhaften Ausgestaltung kann vorgesehen sein, dass der Heizleiter in seinem Heizbereich im Wesentlichen nicht mit elektrisch isolierendem Material bedeckt ist.

Insbesondere dann, wenn der Heizleiter in seinem Haltebereich von dem Träger unter Zwischenlagerung von elektrisch isolierendem Material zumindest bereichsweise umgriffen ist, wird zum Vermeiden eines Wärmestaus in diesem Bereich vorgeschlagen, dass der Heizleiter in seinem Haltebereich eine größere Leiter-Querschnittsfläche aufweist, als in seinem Heizbereich. Durch die größere Leiter-Querschnittsfläche im Haltebereich weist der Heizleiter im Haltebereich bezogen auf eine Längeneinheit einen geringeren elektrischen Widerstand auf, als im Heizbereich, so dass aufgrund des größeren Spannungsabfalls im Heizbereich dort mehr Wärme bereitgestellt wird, als im Haltebereich.

Weiter kann vorgesehen sein, dass der Heizleiter in seinem Heizbereich eine sich verändernde Querschnittsabmessung aufweist. Dies bedeutet, dass der Heizbereich verschiedene Längenabschnitte verschiedener Querschnittsabmessungen aufweisen kann, so dass durch die variierende Querschnittsabmessung Bereiche unterschiedlichen elektrischen Widerstands und somit auch unterschiedlicher auf das Abgas übertragbarer Wärmemengen existieren. Dies ist insbesondere vorteilhaft in Systemen, in welchen der Heizleiter nicht gleichmäßig angeströmt werden kann und somit aus dem Heizleiter von diesen umströmendem Abgas nicht gleichmäßig Wärme abgetragen werden kann. Das Entstehen von Überhitzungsbereichen kann somit vermieden werden.

Zur elektrischen Kontaktierung des Heizleiters können am Haltebereich zwei Anschlussabschnitte vorgesehen sein.

Für eine über den Strömungsquerschnitt großflächige thermische Wechselwirkung zwischen dem Heizleiter und dem diesen umströmenden Abgas ist der Heizleiter wenigstens in seinem Heizbereich wenigstens bereichsweise windungsartig sich erstreckend ausgebildet.

Hierzu ist vorgesehen, dass der Heizleiter eine Mehrzahl von in Umfangsrichtung aufeinander folgenden Mäander-Windungsfeldern mit einer Mehrzahl von bezüglich einer Abgasheizer-Mittenachse radial aufeinanderfolgend angeordneten, im Wesentlichen in Umfangsrichtung sich erstreckenden Mäander-Windungsabschnitten umfasst, wobei wenigstens ein, vorzugsweise mehrere Mäander-Windungsabschnitte in einem ersten Umfangsende an einen radial weiter innen positionierten Mäander-Windungsabschnitt anschließen und in einem zweiten Umfangsende an einen radial weiter außen positionierten Mäander-Windungsabschnitt anschließen.

Um über den Umfang verteilt eine in sich stabile Struktur des Heizleiters zu erreichen, ist vorgesehen, dass bei der Mehrzahl von in Umfangsrichtung aufeinanderfolgenden Mäander-Windungsfeldern bei in Umfangsrichtung einander unmittelbar benachbarten Mäander-Windungsfeldern ein radial innerer, vorzugsweise ein radial innerster Mäander-Windungsabschnitt eines Mäander-Windungsfelds in einem radial inneren Anschlussbereich an einen radial inneren, vorzugsweise einen radial innersten Mäander-Windungsabschnitt eines zu dem einen Mäander-Windungsfeld in einer ersten Umfangsrichtung unmittelbar benachbarten Mäander-Windungsfelds anschließt und ein radial äußerer, vorzugsweise ein radial äußerster Mäander-Windungsabschnitt des einen Mäander-Windungsfelds in einem radial äußeren Anschlussbereich an einen radial äußeren, vorzugsweise einen radial äußersten Mäander-Windungsabschnitt eines zu dem einen Mäander-Windungsfeld in einer zweiten Umfangsrichtung unmittelbar benachbarten Mäander-Windungsfelds anschließt, so dass alle in Umfangsrichtung aufeinander folgenden Mäander-Windungsfelder zueinander seriell geschaltet sind. Eine über einen sehr großen Umfangsbereich ausgedehnte Erstreckung einzelner Mäander-Windungsabschnitte kann somit vermieden werden.

Der Haltebereich kann bei wenigstens einem, vorzugsweise jedem Mäander-Windungsfeld einen radial äußersten Mäander-Windungsabschnitt bereitstellen.

Die Erfindung betrifft ferner Abgasanlage für eine Brennkraftmaschine, umfassend eine vorzugsweise rohrartige Abgasführungskomponente und wenigstens einen in der Abgasführungskomponente angeordneten, erfindungsgemäß aufgebauten Abgasheizer.

Die vorliegende Erfindung wird nachfolgend mit Bezug auf die beiliegenden Figuren detailliert beschrieben. Es zeigt:
- Fig. 1: eine perspektivische Ansicht eines Abgasheizers für eine Abgasanlage einer Brennkraftmaschine, betrachtet in Blickrichtung I in Fig. 2;
- Fig. 2: eine perspektivische Ansicht des Abgasheizers der Fig. 1, betrachtet in Blickrichtung II in Fig. 1;
- Fig. 3: Axialschnittansicht des Abgasheizers der Fig. 1 und 2;
- Fig. 4: eine Draufsicht auf einen Heizleiter des Abgasheizers der Fig. 1-3;

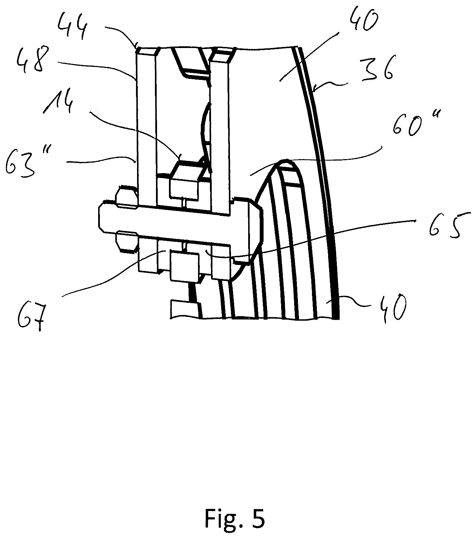

- Fig. 5: eine Detailansicht der Verbindung des Heizleiters mit einer Stützanordnung;
- Fig. 6: in prinzipartiger Darstellung eine einen Abgasheizer enthaltende Abgasanlage einer Brennkraftmaschine.

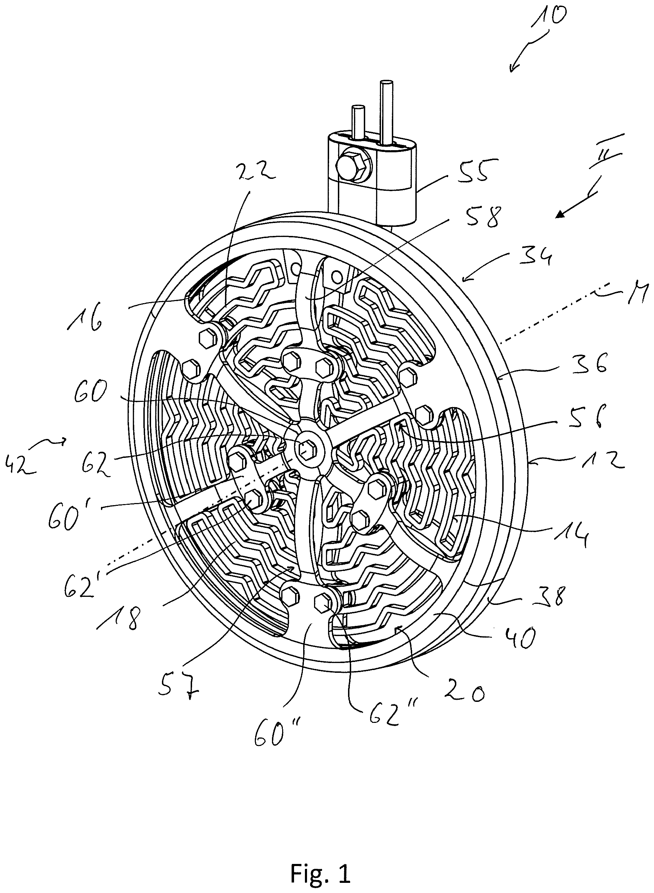

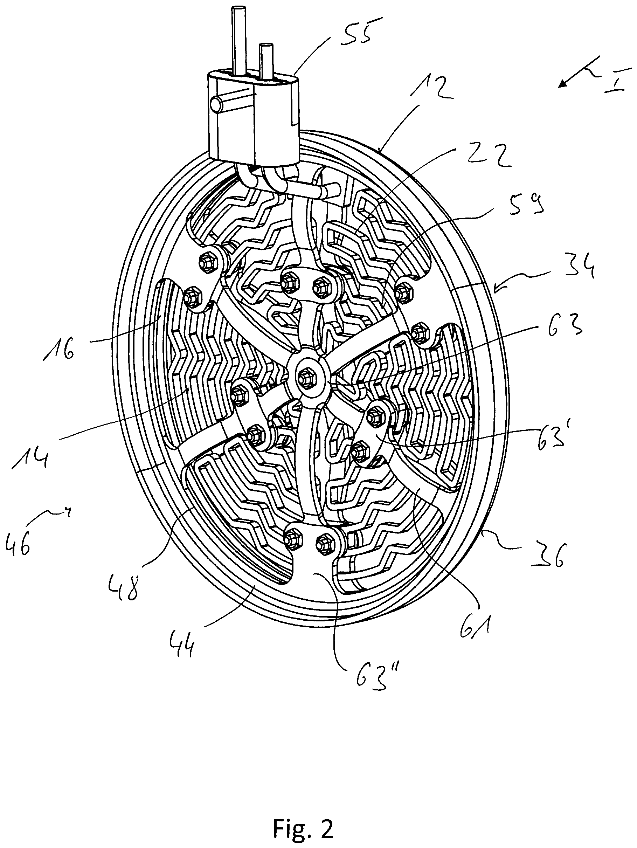

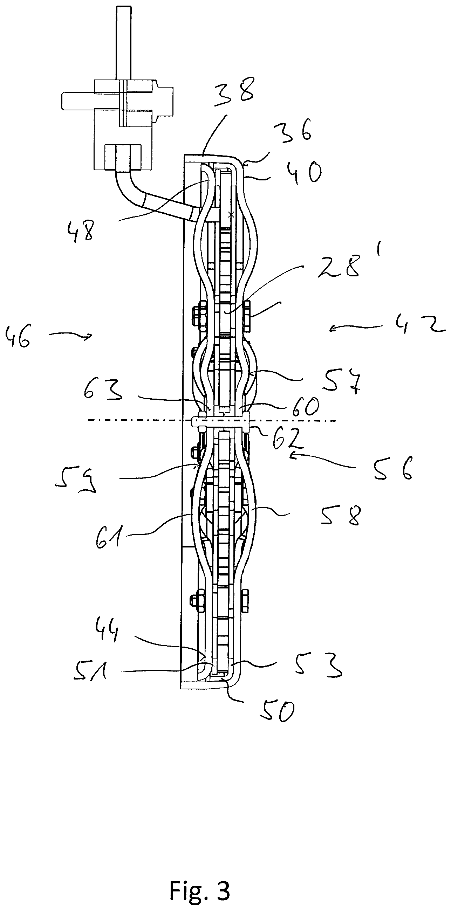

Ein in den Fig. 1-3 dargestellter Abgasheizer 10 ist beispielsweise zur Anpassung an den kreisrunden Innenquerschnitt eines diesen aufnehmenden abgasführenden Gehäuses mit im Wesentlichen kreisrunder Außenumfangskontur ausgebildet. Der Abgasheizer 10 umfasst in seinem - bezogen auf eine Abgasheizer-Mittenachse M - radial äußeren Bereich einen ringartigen Träger 12 und einen an dem ringartigen Träger 12 getragenen Heizleiter 14.

Der Heizleiter 14 weist radial außen einen an den Träger 12 getragenen Haltebereich 16 auf und weist radial innerhalb des Haltebereichs 16 einen von Abgas umströmbaren Heizbereich 18 auf.

Der Heizleiter 14 des erfindungsgemäß aufgebauten Abgasheizers 10 ist aus einem beispielsweise mit einer Chrom/Nickel-Legierung aufgebauten Metall-Flachmaterial-Rohling durch Heraustrennen bereitgestellt. Dabei kann der Heizleiter 14 beispielsweise durch Ausstanzen mit der gewünschten Kontur bereitgestellt werden. Alternativ kann der Heizleiter 14 durch Schneiden, beispielsweise Laserschneiden oder Wasserstrahlschneiden, aus dem Metall-Flachmaterial-Rohling herausgetrennt werden. Da im Allgemeinen ein derartiger Metall-Flachmaterial-Rohling eine ebene Gestalt aufweist, weist auch der Heizleiter 14 eine im Wesentlichen ebene, in einer zur Abgasheizer-Mittenachse M im Wesentlichen orthogonalen Ebene liegende Struktur auf.

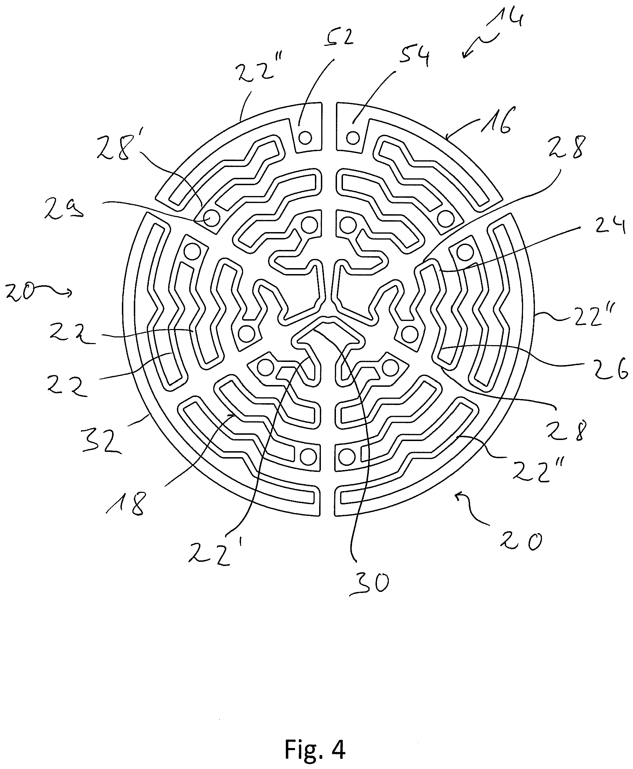

Der Heizleiter 14 ist in dem dargestellten Ausgestaltungsbeispiel mit einer windungsartigen Struktur ausgebildet. Deutlich zu erkennen ist in Fig. 4, dass der Heizleiter 14 mit insgesamt sechs zueinander im Wesentlichen identisch aufgebauten Mäander-Windungsfeldern 20 bereitgestellt ist. In jedem der Mäander-Windungsfelder 20 sind radial einander benachbart angeordnete Mäander-Windungsabschnitte 22 so angeordnet, dass sie sich, unabhängig von lokalen Abweichungen, im Wesentlichen in Umfangsrichtung um die Abgasheizer-Mittenachse M erstrecken, wobei von radial innen nach radial außen die Mäander-Windungsabschnitte eine zunehmende Umfangslänge aufweisen und somit die Mäander-Windungsfelder 20 eine näherungsweise dreieckförmige Umfangskontur aufweisen. Die Mäander-Windungsabschnitte 22 schließen in jedem ihrer beiden Umfangsenden 24, 26 jeweils an einen entweder radial weiter außen oder radial weiter innen positionierten Mäander-Windungsabschnitt 22 über im Wesentlichen radial sich erstreckende Verbindungsabschnitte 28 an. Ein jeweiliger radial innerster Mäander-Windungsabschnitt 22' eines jeweiligen Mäander-Windungsfeldes 20 ist über einen inneren Anschlussbereich 30 an den radial innersten Mäander-Windungsabschnitt 22' eines in einer ersten Umfangsrichtung unmittelbar benachbarten anderen Mäander-Windungsfelds 20 angeschlossen. Ein jeweiliger äußerster Mäander-Windungsabschnitt 22" ist über einen äußeren Anschlussbereich 32 an den radial äußersten Mäander-Windungsabschnitt 22' eines in der zweiten Umfangsrichtung unmittelbar benachbarten Mäander-Windungsfelds 20 angeschlossen, so dass alle in Umfangsrichtung aufeinanderfolgenden Mäander-Windungsfelder 20 im Heizleiter 14 zueinander seriell geschaltet sind.

Die radial äußersten Mäander-Windungsabschnitte 22' der Mäander-Windungsfelder 20 bilden im Wesentlichen den Haltebereich 16 des Heizleiters 14, in welchem dieser am Träger 12 gehalten ist. Hierzu ist der Träger 12 mit einem den Heizleiter 14 im Bereich der radial äußersten Mäander-Windungsabschnitte 22", also im Haltebereich 16, umgreifenden Trägerkörper 34 ausgebildet. Der Trägerkörper 34 weist ein erstes Trägerkörperteil 36 auf, welches mit einem Axialabschnitt 38 den Haltebereich 16 des Heizleiters 14 axial übergreift. Ferner weist das erste Trägerkörperteil 36 einen vom Axialabschnitt 38 sich nach radial innen erstreckenden ersten Radialabschnitt 40 auf. Mit dem ersten Radialabschnitt 40 übergreift das erste Trägerkörperteil 36 den Haltebereich 16 des Heizleiters 14 in radialer Richtung an einer ersten Axialseite 42 nahezu vollständig.

Der Trägerkörper 36 umfasst ferner ein zweites Trägerkörperteil 44, welches an einer zweiten Axialseite 46 des Heizleiters 14 in das erste Trägerkörperteil 36 eingesetzt ist und daran beispielsweise durch Materialschluss, wie z. B. Verschweißen, festgelegt ist. Mit einem zweiten Radialabschnitt 48 erstreckt das zweite Trägerkörperteil 44 sich nach radial innen und übergreift den Haltebereich 16 des Heizleiters 14 in radialer Richtung nahezu vollständig.

Der Trägerkörper 34 definiert somit eine nach radial innen offene, U-förmige Struktur, in welcher der Haltebereich 16 des Heizleiters 14 mit den diesen im Wesentlichen bereitstellenden radial äußersten Mäander-Windungsabschnitten 22" unter Zwischenlagerung von elektrisch isolierendem Material 50 aufgenommen ist. Das elektrisch isolierende Material 50 überdeckt den Haltebereich 16 des Heizleiters 14 an den beiden Axialseiten 42, 46 und radial außen. Hierzu ist das elektrisch isolierendem Material mit einem axial am Haltebereich 16 an der zweiten Axialseite 46 anliegenden ersten ringartigen Isolierelement 51 und einem axial am Haltebereich 16 an der ersten Axialseite 42 anliegenden und diesen radial außenübergreifenden zweiten ringartigen Isolierelement 53 ausgebildet. Somit ist der insbesondere in seinem Heizbereich 18 im Wesentlichen nicht von elektrisch isolierendem Material überdeckte Heizleiter 14 elektrisch bezüglich des Trägers 12 isoliert.

Zur elektrischen Kontaktierung des Heizleiters 14 weist dieser an zwei in Umfangsrichtung aufeinanderfolgenden und nicht durch einen äußeren Anschlussbereich 32 miteinander verbundenen äußersten Mäander-Windungsabschnitten 22' jeweils einen von diesen, also vom Haltebereich 16 nach radial innen über den Träger 12 hervorstehenden Anschlussabschnitt 52 bzw. 54 auf. Mit diesen ist eine ein den Abgasheizer 10 aufnehmendes Gehäuse durchgreifende Kontakteinheit 55 verbunden, um den Heizleiter 14 mit einer Spannungsquelle zu koppeln.

Um den Heizleiter 14 am Träger 12 nicht nur in seinem radial äußeren Bereich stabil halten zu können, sondern auch über die gesamte radiale Erstreckung für eine stabile und definierte Positionierung des Heizleiters 14 zu sorgen, umfasst der Träger 12 eine den Heizleiter 14 an beiden Axialseiten 42, 46 axial stützende Stützanordnung 56. Die Stützanordnung 56 umfasst in Zuordnung zu jedem Trägerkörperteil 36, 44 eine sternartige Stützstruktur 57, 59 jeweils mit einer Mehrzahl von im Wesentlichen radial sich erstreckenden Stützarmen 58, 61, welche radial innen in einem zentral positionierten Kopplungsbereich 60, 63 aneinander anschließen und radial außen an den ersten Radialabschnitt 40 des ersten Trägerkörperteils 36 bzw. den zweiten Radialabschnitt 48 des zweiten Trägerkörperteils 44 anschließen. Die Stützstrukturen 57, 59 der Stützanordnung 56 sind vorzugsweise mit dem ersten Trägerkörperteil 36 bzw. dem zweiten Trägerkörperteil 44 jeweils als Blechumformteil einstückig bereitgestellt.

In den radial zentralen, plattenartigen Kopplungsbereichen 60, 63 der Stützanordnung 56 ist der Heizleiter 14 im Bereich der dort jeweils verlaufenden und zwei radial innerste Mäander-Windungsabschnitte 22' einander unmittelbar benachbarter Mäander-Windungsfelder 20 verbindenden inneren Anschlussbereiche 30 an der Stützanordnung 56 fixiert. Hierzu kann beispielsweise ein an den Kopplungsbereichen 60, 63 festgelegter Fixierbolzen 62, beispielsweise Fixierschraube, genutzt werden, so dass die radial inneren Anschlussbereiche 30 des Heizbereich 18 zwischen den Kopplungsbereichen 60, 63 axial fest eingespannt sind.

Auch in radial weiter außen liegenden Kopplungsbereichen 60', 63' bzw. 60", 63" der Stützarme 58, 61 der Stützstrukturen 57, 59 kann der Heizleiter 14 unter Einsatz jeweiliger Fixierbolzen 62', 62" an der Stützanordnung 56 fixiert werden. Dabei ist zu erkennen, dass in einander in Umfangsrichtung unmittelbar benachbarten Stützamen 58 vorgesehene Kopplungsbereiche 60', 63' bzw. 60", 63" zueinander radial versetzt liegen, um alternierend den Heizleiter in verschiedenen Radialbereichen bezüglich der Stützanordnung 56 fixieren zu können.

Im Bereich der Kopplungsbereiche 60',63' bzw. 60", 63" bzw. der Fixierbolzen 62', 62" ist der Heizleiter 14 ebenso wie im Bereich der Kopplungsbereiche 60, 63 lokal von elektrisch isolierendem Material überdeckt, um das Entstehen eines elektrischen Kurzschlusses zu vermeiden. Dieses elektrisch isolierende Material kann zwei beidseits des Heizleiters 14 positionierte und beispielsweise mit Keramikmaterial aufgebaute Isolierhülsen 65, 67 umfassen, welche den Heizbereich 18 des Heizleiters 14 bezüglich der jeweiligen Kopplungsbereiche 60', 63' bzw. 60", 63" und der diese durchsetzenden Fixierbolzen 62', 62" elektrisch isoliert. Um dabei einen Eingriff der Isolierhülsen 65, 67 in den Heizbereich 18 zu ermöglichen, kann in Zuordnung zu jedem der Kopplungsbereiche 60', 63' bzw. 60", 63"der Heizleiter 14 im Heizbereich 18 einen jeweiligen in Umfangsrichtung erweiterten Verbindungsabschnitt 28' mit einer darin ausgebildeten Öffnung 29 aufweisen.

Die elektrische Isolierung des Heizleiters 14 in den verschiedenen Verbindungsabschnitten 28' bzw. Kopplungsbereichen 60, 60', 60"bzw. 63, 63', 63' bezüglich der Trägerstrukturen 57, 59 schließt nicht aus, dass im Sinne der vorliegenden Erfindung der Heizleiter 14 in wesentlichen Bereichen seines Heizbereichs 18 zur verbesserten thermischen Wechselwirkung mit diesen umströmendem Abgas nicht mit elektrisch isolierendem Material bedeckt ist.

Durch das Bereitstellen des Heizleiters 14 als aus einem Metall-Flachmaterial herausgetrenntes Bauteil wird es einerseits möglich, den Heizleiter 14 mit einstückiger Struktur in einfach und präzise durchführbarer Art und Weise zu erzeugen. Wie bereits die in Fig. 4 dargestellte windungsartige Struktur des Heizleiters 14 zeigt, kann dieser mit nahezu beliebigem Verlauf hergestellt werden, wobei insbesondere auch die Möglichkeit besteht, die radiale Ausdehnung des Heizleiters in verschiedenen Längenabschnitten desselben bezüglich einander zu variieren. Dies ist in Fig. 4 beispielsweise dadurch erkennbar, dass der Heizleiter 14 in seinem Haltebereich 16, also im Bereich der radial äußersten Mäander-Windungsabschnitte 22", mit größerer radialer Ausdehnung, also Breite, ausgebildet ist, als in den weiter radial innen liegenden Mäander-Windungsabschnitten 22. Dadurch wird erreicht, dass im Haltebereich 16, also dort, wo der Heizleiter 14 in weiten Bereichen von dem Träger 12 bzw. dem elektrisch isolierenden Material 50 umgriffen ist, der Heizleiter 14 - bezogen auf eine Längeneinheit - einen geringeren elektrischen Widerstand aufweist und somit bei Anlegen einer elektrischen Spannung weniger stark erwärmt wird, als in den Mäander-Windungsabschnitten 22, 22' mit geringerer Leiter-Querschnittsfläche. Dem steht nicht entgegen, dass im Haltebereich 16 bzw. auch im Heizbereich 18 lokale Abweichungen im Leiterquerschnitt vorhanden sein können, in welchen beispielsweise der Heizbereich 18 einen größeren Leiterquerschnitt aufweist, als der Haltebereich 16. Von Bedeutung ist für diesen Aspekt im Sinne der vorliegenden Erfindung, dass in den wesentlichen Erstreckungsabschnitten der Heizbereich 18 und der Haltebereich 16 diese Beziehung ihre jeweiligen Leiterquerschnitt bereitstellen Das Auftreten eines Wärmestaus dort, wo der Heizleiter 14 vom Träger 12 umgriffen ist, wird dadurch vermieden und der Einsatz der elektrischen Energie in den Bereichen, in welchen der Heizleiter 14 auch in deutlich besserer thermischer Wechselwirkung mit dem zu erwärmenden Abgas steht, wird unterstützt.

Die Herstellung des Heizleiters 14 durch Heraustrennen aus einem Metall-Flachmaterial ermöglicht es auch, beispielsweise eine über den Umfang ungleichmäßige Verteilung von Abschnitten des Heizbereichs 18 vorzusehen, um, angepasst an die in einer jeweiligen Abgasanlage vorhandenen Strömungsverhältnisse, über den Strömungsquerschnitt verteilt einen unterschiedlichen Wärmeeintrag in das den Abgasheizer 10 umströmende Abgas zu erreichen. Es können somit lokal auftretende Überhitzungen oder lokal auftretende Defizite in der Erwärmung des Abgasstroms vermieden werden.

Für eine effiziente Wärmeübertragung auf das den Heizleiter 14 umströmende Abgas sorgt auch, dass dieser aufgrund des Heraustrennens aus einem Metall-Flachmaterial eine im Wesentlichen rechteckige Leiter-Querschnittskontur aufweist. Diese weist bei gleicher Leiter-Querschnittsfläche eine größere Oberfläche auf, als eine runde Leiter-Querschnittskontur und gewährleistet somit eine größere Oberfläche zur thermischen Wechselwirkung mit dem zu erwärmenden Abgas.

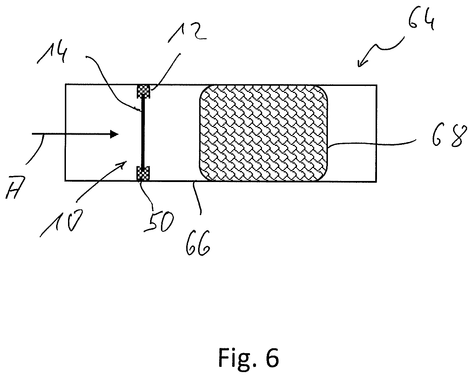

Die Fig. 6 zeigt in prinzipartiger Darstellung eine Abgasanlage 64, in welcher ein vorangehend detailliert beschriebener Abgasheizer 10 integriert ist. Die Abgasanlage 64 umfasst eine beispielsweise rohrartig ausgebildete Abgasführungskomponente 66, in welche der Abgasheizer 10 stromaufwärts bezüglich einer Abgasbehandlungseinheit 68, beispielsweise Katalysator oder Partikelfilter, angeordnet ist. Das auf die Abgasbehandlungseinheit 68 zu strömende Abgas A umströmt zunächst den stromaufwärts der Abgasbehandlungseinheit 68 positionierten Abgasheizer 10 bzw. den Heizleiter 14 desselben, wird dort erwärmt und trägt somit Wärme in die Abgasbehandlungseinheit 68 ein. Dies führt dazu, dass insbesondere in einer Startphase eine Brennkraftmaschine bei noch vergleichsweise geringer Abgastemperatur und bei vergleichsweise kalten Komponenten der Abgasanlage 64 die Abgasbehandlungseinheit 68 durch das am Abgasheizer 10 erwärmte Abgas A schneller erwärmt wird und somit auf Betriebstemperatur gebracht wird. Die Zeitdauer, in welcher die in der Abgasbehandlungseinheit 68 durchzuführende, beispielsweise katalytische Reaktion aufgrund zu geringerer Temperatur nicht ablaufen kann, kann somit deutlich verkürzt werden.

Es ist darauf hinzuweisen, dass der in den Figuren dargestellte Abgasheizer selbstverständlich in verschiedensten Ausgestaltungsaspekten von der konkret dargestellten Ausgestaltungsform abweichen kann. Dies betrifft insbesondere den Verlauf des Heizleiters, welcher nicht notwendigerweise mit mäanderartig sich windender Struktur, sondern beispielsweise auch einer spiralartigen Struktur bereitgestellt werden könnte, und, wie bereits erwähnt, in verschiedenen Umfangsbereichen mit voneinander abweichenden Verlaufsstrukturen ausgebildet sein kann. Der Heizleiter kann insbesondere in seinem Heizbereich eine sich verändernde Querschnittsabmessung, also Bereiche unterschiedlicher Querschnittsabmessung, aufweisen, so dass aufgrund des mit der Querschnittsabmessung sich auch verändernden elektrischen Widerstandes im Verlauf des Heizbereichs die in verschiedenen Bereichen erzeugten Wärmemengen unterschiedlich sein können und somit eine inhomogene Anströmung mit Abgas zum Vermeiden von Überhitzungsbereichen kompensiert werden kann. Auch können beispielsweise an einem Träger 12 axial aufeinanderfolgend mehrere bezüglich einander beispielsweise isoliert gehaltene oder aber auch in direktem Anlagekontakt stehende Heizleiter 14 positioniert werden. Selbstverständlich können in einer Abgasanlage in einem abgasführenden Gehäuse mehrere beispielsweise mit einem Heizleiter aufgebaute Abgasheizer positioniert sein. Dies ist insbesondere auch daher möglich, da gemäß einem besonders vorteilhaften Aspekt bei dem erfindungsgemäß aufgebauten Abgasheizer 10 der Heizleiter 14 im Wesentlichen in der der Zeichenebene der Fig. 4 entsprechenden Ebene liegt, also beispielsweise nicht durch nachträgliches axiales Ausdehnen so geformt ist, dass der zentrale Bereich des Heizleiters 14 bezüglich des radial außen liegenden Haltebereichs 16 axial versetzt liegt. Da der Heizleiter 14 durch Heraustrennen aus einem im Wesentlichen ebenen Metall-Flachmaterial erzeugt wird, würde das axiale Ausdehnen des Heizleiters 14 nicht zu einer Vergrößerung der zur Verfügung stehenden Wärmeübertragungsoberfläche führen, sondern würde lediglich zu einer größeren Beabstandung der einander benachbarten Abschnitte des Heizleiters 14 führen und somit möglicherweise zu einer Beeinträchtigung der thermischen Wechselwirkung mit dem den Heizleiter 14 umströmenden Abgas beitragen. Gleichwohl sei darauf hingewiesen, dass, sofern dies beispielsweise aufgrund der Strömungsverhältnisse vorteilhaft ist, der Heizleiter 14 auch eine derartige axial ausgedehnte Struktur mit axialem Versatz zwischen dem radial äußeren Bereich desselben und dem radial inneren Bereich desselben haben kann. Hierzu kann beispielsweise auch die den Heizleiter 14 axial stützende Stützanordnung 56 eine derartige beispielsweise kegelartige axial ausgedehnte Struktur aufweisen.

## Patentansprüche

1. Abgasheizer für eine Abgasanlage einer Brennkraftmaschine, umfassend einen Träger (12) und wenigstens einen an dem Träger (12) getragenen, stromdurchflossenen Heizleiter (14) mit einem an dem Träger (12) gehaltenen Haltebereich (16) und einem von Abgas (A) umströmbaren Heizbereich (18), wobei der Heizleiter (14) durch Heraustrennen aus einem Metall-Flachmaterial bereitgestellt ist, **dadurch gekennzeichnet, dass** der Heizleiter (14) wenigstens in seinem Heizbereich (18) wenigstens bereichsweise windungsartig sich erstreckend ausgebildet ist und eine Mehrzahl von in Umfangsrichtung aufeinanderfolgenden Mäander-Windungsfeldern (20) umfasst, wobei jedes Mäander-Windungsfeld (20) eine Mehrzahl von bezüglich einer Abgasheizer-Mittenachse (M) radial aufeinanderfolgend angeordneten, im Wesentlichen in Umfangsrichtung sich erstreckenden Mäander-Windungsabschnitten (22, 22', 22") umfasst, wobei in jedem Mäander-Windungsfeld (20) wenigstens ein Mäander-Windungsabschnitt (22) in einem ersten Umfangsende (24) an einen radial weiter innen positionierten Mäander-Windungsabschnitt (22, 22') anschließt und in einem zweiten Umfangsende (26) an einen radial weiter außen positionierten Mäander-Windungsabschnitt (22, 22") anschließt, und wobei bei in Umfangsrichtung einander unmittelbar benachbarten Mäander-Windungsfeldern (20) ein radial innerer Mäander-Windungsabschnitt (22') eines Mäander-Windungsfelds (20) in einem radial inneren Anschlussbereich (30) an einen radial inneren Mäander-Windungsabschnitt (22') eines zu dem einen Mäander-Windungsfeld (20) in einer ersten Umfangsrichtung unmittelbar benachbarten Mäander-Windungsfelds (20) anschließt und ein radial äußerer Mäander-Windungsabschnitt (22") des einen Mäander-Windungsfelds (20) in einem radial äußeren Anschlussbereich (32) an einen radial äußeren Mäander-Windungsabschnitt (22") eines zu dem einen Mäander-Windungsfeld (20) in einer zweiten Umfangsrichtung unmittelbar benachbarten Mäander-Windungsfelds (20) anschließt, so dass alle in Umfangsrichtung aufeinanderfolgenden Mäander-Windungsfelder (20) zueinander seriell geschaltet sind.

2. Abgasheizer nach Anspruch 1, **dadurch gekennzeichnet, dass** der Heizleiter (14) mit eckiger, vorzugsweise rechteckiger, Leiter-Querschnittskontur ausgebildet ist.

3. Abgasheizer nach Anspruch 1 oder 2, **dadurch gekennzeichnet, dass** der Haltebereich (16) bezogen auf eine Abgasheizer-Mittenachse (M) radial außerhalb des Heizbereichs (18) angeordnet ist, oder/und dass der Haltebereich (16) und der Heizbereich (18) im Wesentlichen in einer vorzugsweise zur Abgasheizer-Mittenachse (M) orthogonalen Ebene angeordnet sind.

4. Abgasheizer nach Anspruch 3, **dadurch gekennzeichnet, dass** der Träger (12) einen den Heizleiter (14) radial außen umgebenden und im Haltebereich (16) an wenigstens einer axialen Seite (42, 46) radial übergreifenden Trägerkörper (34) umfasst, oder/und dass der Träger (12) an wenigstens einer Axialseite (46) des Heizleiters (14) eine den Heizleiter (14) axiale stützende Stützanordnung (56) umfasst.

5. Abgasheizer nach Anspruch 4, **dadurch gekennzeichnet, dass** der Trägerkörper (34) ein erstes Trägerkörperteil (38) mit einem den Haltebereich (16) radial außen axial übergreifenden Axialabschnitt (38) und einem von dem Axialabschnitt (38) nach radial innen sich erstreckenden und den Haltebereich (16) an einer ersten Axialseite (42) wenigstens teilweise radial übergreifenden ersten Radialabschnitt (40) sowie ein am ersten Trägerkörperteil (38) festgelegtes zweites Trägerkörperteil (44) mit einem den Haltebereich (16) an einer zweiten Axialseite (46) radial wenigstens teilweise übergreifenden zweiten Radialabschnitt (48) umfasst.

6. Abgasheizer nach Anspruch 5, **dadurch gekennzeichnet, dass** das erste Trägerkörperteil (38) oder/und das zweite Trägerkörperteil (44) ringartig ausgebildet ist.

7. Abgasheizer nach einem der Ansprüche 4-6, **dadurch gekennzeichnet, dass** zwischen dem Trägerkörper (34) und dem Haltebereich (16) elektrisch isolierendes Material (50) angeordnet ist.

8. Abgasheizer nach einem der Ansprüche 1-7, **dadurch gekennzeichnet, dass** der Heizleiter (14) in seinem Heizbereich (18) im Wesentlichen nicht mit elektrisch isolierendem Material bedeckt ist.

9. Abgasheizer nach einem der Ansprüche 1-8, **dadurch gekennzeichnet, dass** der Heizleiter (14) in seinem Haltebereich (16) eine größere Leiter-Querschnittsfläche aufweist, als in seinem Heizbereich (18), oder/und dass der Heizleiter (14) in seinem Heizbereich (18) eine sich verändernde Querschnittsabmessung aufweist.

10. Abgasheizer nach einem der Ansprüche 1-9, dass am Haltebereich (16) zwei Anschlussabschnitte (52, 54) zur elektrischen Kontaktierung des Heizleiters (14) vorgesehen sind.

11. Abgasheizer nach einem der Ansprüche 1-10, **dadurch gekennzeichnet, dass** bei jedem Mäander-Windungsfeld (20) mehrere Mäander-Windungsabschnitte (22) in einem ersten Umfangsende (24) an einen radial weiter innen positionierten Mäander-Windungsabschnitt (22, 22') anschließen und in einem zweiten Umfangsende (26) an einen radial weiter außen positionierten Mäander-Windungsabschnitt (22, 22") anschließen.

12. Abgasheizer nach einem der Ansprüche 1-11, **dadurch gekennzeichnet, dass** bei den in Umfangsrichtung einander unmittelbar benachbarten Mäander-Windungsfeldern (20) ein radial innerster Mäander-Windungsabschnitt (22') eines Mäander-Windungsfelds (20) in einem radial inneren Anschlussbereich (30) an einen radial innersten Mäander-Windungsabschnitt (22') des zu dem einen Mäander-Windungsfeld (20) in der ersten Umfangsrichtung unmittelbar benachbarten Mäander-Windungsfelds (20) anschließt und ein radial äußerster Mäander-Windungsabschnitt (22") des einen Mäander-Windungsfelds (20) in einem radial äußeren Anschlussbereich (32) an einen radial äußersten Mäander-Windungsabschnitt (22") des zu dem einen Mäander-Windungsfeld (20) in der zweiten Umfangsrichtung unmittelbar benachbarten Mäander-Windungsfelds (20) anschließt.

13. Abgasheizer nach einem der Ansprüche 1-12, **dadurch gekennzeichnet, dass** bei wenigstens einem, vorzugsweise jedem Mäander-Windungsfeld (20) der Haltebereich (16) einen radial äußersten Mäander-Windungsabschnitt (22") bereitstellt.

14. Abgasanlage für eine Brennkraftmaschine, umfassend eine vorzugsweise rohrartige Abgasführungskomponente (66) und wenigstens einen in der Abgasführungskomponente (66) angeordneten Abgasheizer (10) nach einem der Ansprüche 1-13.

## Claims

1. An exhaust gas heater for an exhaust gas system of a combustion engine, comprising a carrier (12) and at least one current-carrying heating conductor (14), which is carried on the carrier (12) and having a holding region (16) held on the carrier (12) and a heating region (18) around which exhaust gas (A) can flow, wherein the heating conductor (14) is provided by being cut out of a flat metal material, **characterized in that** the heating conductor (14), at least in its heating region (18), is designed to extend in a winding-like manner at least in regions and comprises a plurality of meandering winding fields (20) following one another in the circumferential direction, wherein each meandering winding field (20) comprises a plurality of meandering winding portions (22, 22', 22") arranged in radial succession with respect to an exhaust gas heater center axis (M) and extending substantially in the circumferential direction, wherein at least one meandering winding portion (22) in each meandering winding field (20) adjoins in a first circumferential end (24) a meandering winding portion positioned radially further inwards (22, 22'), and in a second circumferential end (26), adjoins a meandering winding portion positioned radially further outwards (22, 22"), and wherein, in the case of meandering winding fields (20) which are directly adjacent to one another in the circumferential direction, a radially inner meandering winding portion (22') of a meandering winding field (20) adjoins, in a radially inner connection region (30), a radially inner meandering winding portion (22') of a meandering winding field (20) which is directly adjacent to the one meandering winding field (20) in a first circumferential direction, and a radially outer meandering winding portion (22") of the one meandering winding field (20) is connected in a radially outer connection region (32) to a radially outer meandering winding portion (22") of a meandering winding field (20) directly adjacent to the one meandering winding field (20) in a second circumferential direction, so that all meandering winding fields (20) following one another in the circumferential direction are connected in series with one another.

2. The exhaust gas heater as claimed in claim 1, **characterized in that** the heating conductor (14) is formed with an angular, preferably rectangular, conductor cross-portional contour.

3. The exhaust gas heater as claimed in claim 1 or 2, **characterized in that** the holding region (16) is arranged radially outside the heating region (18) relative to an exhaust gas heater center axis (M), and/or that the holding region (16) and the heating region (18) are arranged substantially in a plane which is preferably orthogonal to the exhaust gas heater center axis (M).

4. The exhaust gas heater as claimed in claim 3, **characterized in that** the carrier (12) comprises a carrier body (34) surrounding the heating conductor (14) radially on the outside and overlapping it radially in the holding region (16) on at least one axial side (42, 46), and/or that the carrier (12), on at least one axial side (46) of the heating conductor (14), comprises a supporting arrangement (56) supporting the heating conductor (14) axially.

5. The exhaust gas heater as claimed in claim 4, **characterized in that** the carrier body (34) comprises a first carrier body part (38) having an axial portion (38) axially overlapping the holding region (16) radially on the outside and a first radial portion (40) extending radially inwards from the axial portion (38) and radially overlapping the holding region (16), at least in part, on a first axial side (42), and a second carrier body part (44) fixed to the first carrier body part (38) and having a second radial portion (48) overlapping the holding region (16) radially, at least in part, on a second axial side (46).

6. The exhaust gas heater as claimed in claim 5, **characterized in that** the first carrier body part (38) and/or the second carrier body part (44) is formed in a ring-like manner.

7. The exhaust gas heater as claimed in one of claims 4-6, **characterized in that** electrically insulating material (50) is arranged between the carrier body (34) and the holding region (16).

8. The exhaust gas heater as claimed in one of claims 1-7, **characterized in that** the heating conductor (14) is substantially not covered with electrically insulating material in its heating region (18).

9. The exhaust gas heater as claimed in one of claims 1-8, **characterized in that** the heating conductor (14) has a larger conductor cross-portional area in its holding region (16) than in its heating region (18), and/or that the heating conductor (14) has a varying cross-portional size in its heating region (18).

10. The exhaust gas heater as claimed in one of claims 1-9, **characterized in that** two connection portions (52, 54) are provided on the holding region (16) for electrical contacting of the heating conductor (14).

11. The exhaust gas heater as claimed in one of the claims 1-10, **characterized in that** with each meandering winding filed (20) several meandering winding portions (22) adjoin a meandering winding portion (22, 22') which is positioned radially further inside in a first circumferential end (24), and, in a second circumferential end (26), adjoin a meandering winding portion (22, 22") which is positioned radially further outside.

12. The exhaust gas heater as claimed in in one of the claims 1-11, **characterized in that** in the circumferential direction, in mutually directly adjacent meandering winding fields (20), a radially innermost meandering winding portion (22') of one meandering winding field (20) in a radially inner connection region (30) adjoins a radially innermost meandering winding portion (22') of a meandering winding field (20) which is directly adjacent to the one meandering winding field (20) in the first circumferential direction, and that a radially outermost meandering winding portion (22") of the one meandering winding field (20) in a radially outer connection region (32) adjoins a radially outermost, meandering winding portion (22") of a meandering winding field (20) which, in a second circumferential direction, is directly adjacent to the one meandering winding field (20).

13. The exhaust gas heater as claimed in one of the claims 1-12, **characterized in that**, in at least one, preferably each, meandering winding field (20), the holding region (16) provides a radially outermost meandering winding portion (22").

14. An exhaust gas system for a combustion engine, comprising a preferably tubular exhaust gas routing component (66) and at least one exhaust gas heater (10) as claimed in one of claims 1-13 arranged in the exhaust gas routing component (66).

## Revendications

1. Un chauffage de gaz d'échappement pour un système de gaz d'échappement d'un moteur à combustion, comprenant un support (12) et au moins un conducteur de chauffage (14), à travers lequel le courant peut circuler, porté sur le support (12) avec une zone de maintien (16) maintenue sur le support (12) et une zone de chauffage (18) autour de laquelle le gaz d'échappement (A) peut circuler, dans lequel le conducteur de chauffage (14) est fourni en étant découpé dans un matériau métallique plat, **caractérisé en ce que** le conducteur de chauffage (14), au moins dans sa zone de chauffage (18), est conçu pour s'étendre en forme d'enroulement au moins dans des zones et comprend une pluralité de champs d'enroulement en méandres (20) se succédant dans la direction circonférentielle, dans lequel chaque champ d'enroulement en méandres (20) comprend une pluralité de portions d'enroulement en méandres (22, 22', 22") disposées radialement l'une après l'autre par rapport à un axe central de chauffage de gaz d'échappement (M) et s'étendant sensiblement dans la direction circonférentielle, dans lequel au moins une portion d'enroulement en méandres (22) dans chaque champ d'enroulement en méandres (20) est adjacente dans une première extrémité circonférentielle (24) à une portion d'enroulement en méandres positionnée radialement plus à l'intérieur (22, 22'), et dans une deuxième extrémité circonférentielle (26), est adjacente à une portion d'enroulement en méandres positionnée radialement plus à l'extérieur (22, 22"), et dans lequel, dans le cas de champs d'enroulement en méandres (20) directement adjacents les uns aux autres dans la direction circonférentielle, une portion d'enroulement en méandres radialement intérieure (22') d'un champ d'enroulement en méandres (20) rejoint, dans une zone de connexion radialement intérieure (30), une portion d'enroulement en méandres radialement intérieure (22') d'un champ d'enroulement en méandres (20) qui est directement adjacente audit un champ d'enroulement en méandres (20) dans une première direction circonférentielle, et une portion d'enroulement en méandres radialement extérieure (22") dudit un champ d'enroulement en méandres (20) est adjacente dans une zone de connexion radialement extérieure (32) à une portion d'enroulement en méandres radialement extérieure (22") d'un champ d'enroulement en méandres (20) directement adjacent audit un champ d'enroulement en méandres (20) dans une deuxième direction circonférentielle, de sorte que tous les champs d'enroulement en méandres (20) qui se suivent dans la direction circonférentielle sont reliés en série les uns avec les autres.

2. Le chauffage de gaz d'échappement selon la revendication 1, **caractérisé en ce que** le conducteur de chauffage (14) est formé avec un contour de partie transversale de conducteur angulaire, de préférence rectangulaire.

3. Le chauffage de gaz d'échappement selon la revendication 1 ou 2, **caractérisé en ce que** la zone de maintien (16) est disposée radialement à l'extérieur de la zone de chauffage (18) par rapport à l'axe central de chauffage de gaz d'échappement (M), et/ou **en ce que** la zone de maintien (16) et la zone de chauffage (18) sont disposées sensiblement dans un plan qui est de préférence orthogonal à l'axe central de chauffage de gaz d'échappement (M).

4. Le chauffage de gaz d'échappement selon la revendication 3, **caractérisé en ce que** le support (12) comprend un corps de support (34) entourant le conducteur de chauffage (14) radialement à l'extérieur et le recouvrant radialement dans la zone de maintien (16) sur au moins un côté axial (42, 46), et/ou **en ce que** le support (12), sur au moins un côté axial (46) du conducteur de chauffage (14), comprend un arrangement de support (56) supportant le conducteur de chauffage (14) axialement.

5. Le chauffage de gaz d'échappement selon la revendication 4, **caractérisé en ce que** le corps de support (34) comprend une première partie de corps de support (38) comprenant une partie axiale (38) chevauchant radialement la zone de maintien (16) à l'extérieur et une première partie radiale (40) s'étendant radialement vers l'intérieur à partir de la partie axiale (38) et chevauchant radialement la zone de maintien (16), au moins en partie, sur un premier côté axial (42), et une deuxième partie de corps de support (44) fixée à la première partie de corps de support (38) et présentant une deuxième partie radiale (48) chevauchant radialement la zone de maintien (16), au moins en partie, sur un deuxième côté axial (46).

6. Le chauffage de gaz d'échappement selon la revendication 5, **caractérisé en ce que** la première partie du corps de support (38) et/ou la deuxième partie du corps de support (44) est formée en forme d'anneau.

7. Le chauffage de gaz d'échappement selon l'une des revendications 4 à 6, **caractérisé en ce qu'**un matériau isolant électrique (50) est disposé entre le corps de support (34) et la zone de maintien (16).

8. Le chauffage de gaz d'échappement selon l'une des revendications 1 à 7, **caractérisé en ce que** le conducteur de chauffage (14) n'est pratiquement pas recouvert de matériau isolant électrique dans sa zone de chauffage (18).

9. Le chauffage de gaz d'échappement selon l'une des revendications 1 à 8, **caractérisé en ce que** le conducteur de chauffage (14) présente dans sa zone de maintien (16) une plus grande surface de partie transversale que dans sa zone de chauffage (18), et/ou **en ce que** le conducteur de chauffage (14) présente dans sa zone de chauffage (18) une taille de partie transversale variable.

10. Le chauffage de gaz d'échappement selon l'une des revendications 1 à 9, **caractérisé en ce que** deux parties de connexion (52, 54) sont prévues sur la zone de maintien (16) pour le contact électrique du conducteur de chauffage (14).

11. Le chauffage de gaz d'échappement selon l'une des revendications 1-10, **caractérisé en ce que** dans chaque champ d'enroulement en méandres (20) plusieurs portions d'enroulement en méandres (22) sont, dans une première extrémité circonférentielle (24) adjacentes à une portion d'enroulement en méandres positionnée radialement plus à l'intérieur (22, 22') et sont, dans une deuxième extrémité circonférentielle (26), adjacentes à une portion d'enroulement en méandres positionnée radialement plus à l'extérieur (22, 22").

12. Le chauffage de gaz d'échappement selon l'une des revendications 1 à 11, **caractérisé en ce que**, dans les champs d'enroulement en méandres (20) directement adjacents dans la direction circonférentielle, une portion d'enroulement en méandres radialement la plus intérieure (22') d'un champ d'enroulement en méandres (20) dans une zone de connexion radialement intérieure (30) est adjacente à une portion d'enroulement en méandres radialement la plus intérieure (22'), du champ d'enroulement en méandres (20) directement adjacent audit un champ d'enroulement en méandres (20) dans une première direction circonférentielle, et **en ce qu'**une portion d'enroulement en méandres radialement la plus extérieure (22") dudit un champ d'enroulement en méandres (20) dans une zone de connexion radialement extérieure (32) est adjacente à une portion d'enroulement en méandres radialement la plus extérieure (22") du champ d'enroulement en méandres (20) directement adjacent audit un champ d'enroulement en méandres (20) dans une deuxième direction circonférentielle.

13. Le chauffage de gaz d'échappement selon l'une des revendications 1 à 12, **caractérisé en ce que**, dans au moins un, de préférence chaque, champ d'enroulement en méandres (20), la zone de maintien (16) fournit une portion d'enroulement en méandre radialement la plus extérieure (22").

14. Un système de gaz d'échappement pour un moteur à combustion, comprenant un élément d'acheminement de gaz d'échappement (66), de préférence tubulaire, et au moins un chauffage de gaz d'échappement (10) selon l'une des revendications 1 à 13 arrangé dans l'élément d'acheminement de gaz d'échappement (66).
